# EUROPÄISCHE PATENTSCHRIFT

(11) **EP 3 912 858 B1**
(45) Veröffentlichungstag und Bekanntmachung des Hinweises auf die Patenterteilung: **24.07.2024**
(21) Anmeldenummer: 21173125.2
(22) Anmeldetag: 10.05.2021
(51) Int. Cl.: B60P 7/08

(54) **BORDWAND EINES NUTZFAHRZEUGS, ZURRELEMENT UND ZURRANORDNUNG**
SIDE WALL OF A COMMERCIAL VEHICLE, LASHING ELEMENT AND ARRANGEMENT
PAROI LATÉRALE D'UN VÉHICULE UTILITAIRE, ÉLÉMENT D'ARRIMAGE ET DISPOSITIF D'ARRIMAGE

(30) Priorität: 19.05.2020 DE 102020113556
(43) Veröffentlichungstag der Anmeldung: 24.11.2021
(73) Patentinhaber: Humbaur GmbH, 86368 Gersthofen (DE)
(72) Erfinder: Schmidt, Rainer, 86772 Thierhaupten (DE)
(74) Vertreter: Meissner Bolte Partnerschaft mbB

(56) Entgegenhaltungen:
- EP-B1- 0 588 761
- EP-B1- 2 206 623
- DE-A1- 10 349 936
- DE-A1- 102018 103 497
- DE-A1- 3 605 988
- DE-U1- 202004 003 303
- DE-U1- 202011 051 399
- US-A1- 2015 123 425

## Beschreibung

Die Erfindung betrifft eine Bordwand eines Nutzfahrzeugs gemäß dem Oberbegriff des Patentanspruchs 1. Ferner betrifft die Erfindung ein Zurrelement und eine Zurranordnung für bzw. mit einer solchen Bordwand. Eine Bordwand der eingangs genannten Art ist beispielsweise aus DE 20 2009 009 270 U1 bekannt.

DE 20 2009 009 270 U1 beschreibt eine Bordwand eines Nutzfahrzeugs, wobei die Bordwand einen Seitenwandschenkel und einen Bodenschenkel aufweist. Der Bodenschenkel dient dazu, einen Fahrzeugboden zu tragen bzw. die Bordwand mit einem Fahrzeugboden zu verbinden. Die Bordwand ist insgesamt hohl ausgebildet und weist an einer Innenseite des Seitenwandschenkels eine Vertiefung auf. In der Vertiefung sind Löcher angeordnet, durch die sich eine Zurröse erstreckt. Dabei ist die Vertiefung so gestaltet, dass die Zurröse in einer Nichtgebrauchsstellung bzw. Ruhestellung vollständig in der Vertiefung angeordnet ist und so nicht über die Innenseite des Seitenwandschenkels vorsteht. Damit wird erreicht, dass die gesamte Ladebreite eines Nutzfahrzeugs erhalten bleibt, wenn die Zurröse nicht zur Ladungssicherung benötigt wird.

Im Zuge der Weiterentwicklung einer solchen Bordwand hat es sich gezeigt, dass es vorteilhaft wäre, wenn die verwendeten Zurrösen nicht nur an einer definierten Stelle der Bordwand genutzt werden können, sondern wenn der Benutzer flexibel die Position der Zurrösen entlang der Bordwand festlegen kann. Gleichzeitig sollten die Vorteile der bisherigen Lösung jedoch beibehalten werden.

Möglichkeiten zur flexiblen Positionierung von Zurrösen bieten im Wesentlichen Schienensysteme, wie sie beispielsweise für Laderäume in Personenkraftwagen als Airline-Schienensysteme bekannt sind. Auch DE 10 2018 103 497 A1, EP 0 588 761 B1, DE 20 2011 051 399 U1, DE 20 2004 003303 U1, DE 103 49 936 A1 und EP 2 206 623 B1 beschreiben Schienensysteme zur Ladungssicherung. DE 36 05 988 A1 offenbart ein Bordwandprofil mit Hinterschneidungen zur Aufnahme von Längsflanschen von Zurrschienen für Ladungssicherungssysteme. US 2015/123425 A1 betrifft eine Ladeflächen-Seitenwand und einen Klemmmechanismus mit einem Aktuator, der konfiguriert ist, um Finger der Klemmvorrichtung an der Seitenwand zu befestigen.

Solche Schienensysteme haben jedoch bei der Anwendung in Nutzfahrzeugen, insbesondere Fahrzeuganhängern, Nachteile. Oft werden Nutzfahrzeuge bzw. deren Ladeflächen zum Transport von Schüttgut, insbesondere Sand oder Erde, genutzt. Das Schüttgut kann dabei in die Ladungssicherungsschienen eindringen und lässt sich daraus nur schwer entfernen. Damit wäre also die Verschiebbarkeit bzw. flexible Positionierbarkeit von Zurrösen stark beeinträchtigt, was zu einer hohen Nutzerunzufriedenheit führt.

Vor diesem Hintergrund besteht die Aufgabe der Erfindung darin, eine Bordwand eines Nutzfahrzeugs anzugeben, die dauerhaft und zuverlässig eine flexible Positionierung eines Zurrelements ermöglicht, wobei gleichzeitig der Vorteil beibehalten sein soll, dass das Zurrelement in einer Ruhestellung nicht über die Innenseite eines Seitenwandschenkels vorragt. Ferner ist es Aufgabe der Erfindung, ein Zurrelement für eine solche Bordwand sowie eine Zurranordnung mit einer solchen Bordwand anzugeben.

Erfindungsgemäß wird diese Aufgabe im Hinblick auf die Bordwand durch den Gegenstand des Patentanspruchs 1, im Hinblick auf die Zurranordnung durch den Gegenstand des Patentanspruchs 8 und im Hinblick auf das Zurrelement durch den Gegenstand des Patentanspruchs 13 gelöst.

So beruht die Erfindung auf dem Gedanken, eine Bordwand eines Nutzfahrzeugs, insbesondere eines Fahrzeuganhängers, anzugeben, wobei die Bordwand einen Bodenschenkel und einen Seitenwandschenkel aufweist. Der Seitenwandschenkel umfasst eine Innenseite, an der wenigstens eine Vertiefung vorgesehen ist, wobei in der Vertiefung wenigstens ein Kanal zur Befestigung und Führung eines Zurrelements angeordnet ist und der Kanal eine Öffnung aufweist, die in Richtung des Bodenschenkels in die Vertiefung mündet. Erfindungsgemäß sind an die Öffnung angrenzende Innenflächen des Kanals zur Öffnung hin geneigt.

Bei der Erfindung ist folglich vorgesehen, dass in der Vertiefung ein Kanal angeordnet ist. Dieser Kanal ermöglicht es, ähnlich wie ein Schienensystem, ein Zurrelement an beliebiger Position entlang der Bordwand zu befestigen bzw. es entlang der Bordwand verschiebbar zu führen. Besonders vorteilhaft ist es, dass der Kanal bei der Erfindung eine Öffnung aufweist, die in Richtung des Bodenschenkels in die Vertiefung mündet. Die insoweit nach unten gerichtete Öffnung ermöglicht es, dass in den Kanal eindringendes Schüttgut, insbesondere feinkörniges Schüttgut wie Sand, beim Entladen des Nutzfahrzeugs schwerkraftbedingt aus dem Kanal herausgeführt wird. Beispielsweise kann Sand einfach aus dem Kanal herausrieseln. Damit ist dauerhaft und sicher gewährleistet, dass ein Zurrelement entlang des Kanals verschoben und so an einer beliebigen Stelle entlang des Kanals für die Ladungssicherung verwendet werden kann. Die besondere Anordnung des Kanals in der Bordwand vermeidet also das Problem, dass sich der Kanal mit Schüttgut zusetzt und so ein Verschieben des Zurrelements behindert. Vorzugsweise verlaufen also die an die Öffnung angrenzenden Innenflächen in einem Winkel zum Bodenschenkel, so dass feinkörniges Schüttgut schwerkraftbedingt aus dem Kanal herausfließen kann.

Besonders bevorzugt ist es, wenn der Kanal eine nockenförmige Querschnittskontur aufweist. Als nockenförmig wird im Sinne der vorliegenden Anmeldung eine Innenkontur des Kanals bezeichnet, die im Querschnitt an die Form einer Nocke einer Nockenwelle eines Verbrennungsmotors erinnert. Eine solche Form lässt sich im Wesentlichen als Dreiecksform beschreiben, wobei die Ecken des Dreiecks stark abgerundet sind. Zudem können die Dreiecksseiten leicht gewölbt sein, wobei die Wölbung nach außen weist.

Es hat sich gezeigt, dass eine solche nockenförmige Querschnittskontur einerseits begünstigt, dass in den Kanal eindringendes Schüttgut aufgrund der Schwerkraft wieder aus dem Kanal herausfließt. Andererseits ermöglicht diese nockenförmige Querschnittskontur auch eine gute Verankerung eines Zurrelements in dem Kanal.

Die nockenförmige Querschnittskontur kann im Wesentlichen eine Spitze aufweisen. Als Spitze wird der Bereich der Querschnittskontur mit dem kleinsten Krümmungsradius bezeichnet. In der Analogie zum Nocken einer Nockenwelle eines Verbrennungsmotors entspricht die Spitze dem Bereich des Nockens, der die höchste Ventilöffnung bestimmt. Bei der Erfindung kann diese Spitze vorzugsweise schräg nach unten zum Bodenschenkel der Bordwand hin weisen. Eine an diese Spitze angrenzende, ebenfalls winklig zum Bodenschenkel verlaufende Langseite der nockenförmigen Querschnittskontur kann dann die Öffnung umfassen, die in die Vertiefung mündet.

In einer weiteren Ausgestaltung der Erfindung kann der Kanal eine in die Öffnung ragende Nase umfassen, die eine Abstützung für einen Verankerungsabschnitt des Zurrelements bildet. Die Nase kann insbesondere im Bereich der Spitze der nockenförmigen Querschnittskontur ausgebildet sein. Vorzugsweise zeigt die Nase in Richtung einer Außenseite des Seitenwandschenkels.

Die Nase bildet eine Abstützung für einen Verankerungsabschnitt des Zurrelements. Konkret kann vorgesehen sein, dass das Zurrelement zur Verankerung in dem Kanal einen Verankerungsabschnitt aufweist. Dieser Verankerungsabschnitt kann sich an der Nase des Kanals abstützen. Insbesondere kann der Verankerungsabschnitt in die Spitze der nockenförmigen Innenkontur eingreifen und so auf der an die Spitze angrenzenden Nase aufliegen. Im Wesentlichen lässt sich der Verankerungsabschnitt des Zurrelements also in dem Kanal fixieren, wobei die Nase eine entsprechende Abstützung bildet bzw. zum Formschluss bzw. Reibschluss zwischen dem Verankerungsabschnitt und dem Kanal beiträgt.

Bei einer weiteren bevorzugten Variante der erfindungsgemäßen Bordwand ist vorgesehen, dass der Seitenwandschenkel als Hohlkammerprofil ausgebildet ist. Der Seitenwandschenkel sollte so gestaltet sein, dass er besonders hohe Kräfte in einen Fahrzeugrahmen einleiten bzw. hohen Kräften standhalten kann, die beim Verzurren von Ladung entstehen. Wenn ein Zurrelement in den Kanal eingesetzt ist und das Zurrelement beispielsweise mit einem Zurrgurt beaufschlagt wird, so sollte der Seitenwandschenkel diese vom Zurrgurt über das Zurrelement aufgebrachten Kräfte aufnehmen.

Gleichzeitig soll aus Kostengründen der Materialeinsatz für die Bordwand insgesamt reduziert sein. Insofern ist es vorteilhaft, wenn der Seitenwandschenkel als Hohlkammerprofil ausgebildet ist. Das Hohlkammerprofil kann einerseits zur Gewichtsreduktion, andererseits zur Materialeinsparung und darüber hinaus dennoch so stabil gestaltet sein, dass es die Zurrkräfte, die über das Zurrelement in den Seitenwandschenkel eingebracht werden, aufnehmen kann. Dazu weist der Seitenwandschenkel vorzugsweise mehrere Hohlkammern auf, die durch Querstege getrennt sind. Insofern bildet der Seitenwandschenkel vorzugsweise ein Fachwerkprofil.

Insbesondere ist es bevorzugt, wenn der Seitenwandschenkel mit dem Bodenschenkel einstückig als Aluminium-Stranggussprofil ausgebildet ist. Eine solche Profilgestaltung ist besonders kostengünstig herstellbar. Bevorzugt ist es dabei, wenn das Aluminium-Stranggussprofil als Hohlkammerprofil ausgebildet ist. Dabei ist es vorteilhaft, wenn alle Querstege, die die Hohlkammern des Hohlkammerprofils voneinander trennen, ebenso wie alle weiteren Wandungen innerhalb des Hohlkammerprofils dieselbe Wandstärke aufweisen. Die das Hohlkammerprofil bildende Fachwerkstruktur weist also tragende Strukturelemente auf, die im Wesentlichen dieselbe Wandstärke haben. Dementsprechend ist die Fachwerkstruktur vorzugsweise so gestaltet, dass trotz der einheitlichen Wandstärke eine gute Kraftaufnahme sichergestellt ist, insbesondere im Hinblick auf Ladungssicherungskräfte, die über ein Zurrelement in den Seitenwandschenkel eingetragen werden.

Bei einer weiteren Ausführungsform der erfindungsgemäßen Bordwand ist vorgesehen, dass in dem Kanal ein Kederprofil ausgebildet ist. Bei dieser Variante kann ein alternatives Zurrelement eingesetzt werden, welches das Kederelement umgreift und so entlang des Kederelements verschiebbar ist. Das Kederelement bildet insoweit eine Führungsschiene, die ähnlich wie Eisenbahnschienen ausgebildet ist. Vorzugsweise ragt das Kederelement senkrecht nach unten bzw. ist in einem 90°-Winkel zum Bodenschenkel ausgerichtet. Damit ist sichergestellt, dass Schüttgut, welches in den Kanal eindringt, auch vom Kederprofil nach unten abfließen kann.

Für alle bevorzugten Ausführungsformen der erfindungsgemäßen Bordwand gilt vorzugsweise, dass sich die Vertiefung und der Kanal in Längsrichtung über die gesamte Länge des Seitenwandschenkels erstrecken. Mit anderen Worten können der Kanal und die Vertiefung Teil des Hohlkammerprofils bzw. Aluminium-Stranggussprofils bilden. Damit ist einerseits eine einfache und kostengünstige Herstellung der Bordwand sichergestellt. Andererseits kann so gewährleistet werden, dass das Zurrelement über die gesamte Länge der Bordwand an beliebiger Position befestigt werden kann.

Ein nebengeordneter Aspekt der Erfindung betrifft eine Zurranordnung mit einem Zurrelement und einer zuvor beschriebenen Bordwand. Das Zurrelement umfasst einen Verankerungsabschnitt, der in den Kanal der Bordwand einführbar und in dem Kanal verankerbar ist, so dass das Zurrelement in einer Ruhestellung entlang des Kanals verschiebbar und in einer Gebrauchsstellung im Kanal reibschlüssig und/oder formschlüssig fixierbar ist. Erfindungsgemäß ist der Verankerungsabschnitt mit einem Zurrösenabschnitt einstückig bzw. monolithisch ausgebildet und weist eine Außenkontur auf, die so angepasst ist, dass der Verankerungsabschnitt das Zurrelement im Zusammenwirken mit einer Innenkontur des Kanals des Seitenwandschenkels in dem Kanal hält. Anstelle eines federvorgespannten Rastelements ist also vorgesehen, dass der Verankerungsabschnitt selbst derart geformt ist, dass er beim Einsetzen in den Kanal dort formschlüssig und/oder reibschlüssig verankerbar ist. Eine solche Gestaltung des Zurrelements ist besonders einfach, so dass das Zurrelement insgesamt kostengünstig produzierbar ist.

Das Zurrelement ist also mittels seines Verankerungsabschnitts so aufgebaut, dass es vorzugsweise an beliebiger Stelle in den Kanal eingeführt werden kann. Ferner kann es im Kanal formschlüssig und/oder reibschlüssig verankert werden, so dass es seine so gewählte Position beibehält. Diese fixierte Position kann insbesondere dann eingenommen werden, wenn das Zurrelement in die Gebrauchsstellung überführt wird, also beispielsweise ein Zurrgurt zur Ladungssicherung an dem Zurrelement angreift. Eine besonders gute Verankerung des Zurrelements im Kanal kann also insbesondere dann erreicht werden, wenn das Zurrelement mit Zurrkräften beaufschlagt ist.

Generell gilt, dass es bei der Erfindung bevorzugt ist, wenn die Verankerung der Zurrelements in dem Kanal sowohl formschlüssig, als auch reibschlüssig erfolgt. Dabei kann insbesondere in Längsrichtung des Kanals eine hauptsächlich reibschlüssige Verbindung erzeugt werden, wogegen in einer Querschnittsebene des Seitenwandschenkels hauptsächlich ein Formschluss zwischen dem Kanal und dem Verankerungsabschnitt die Befestigung des Zurrelements bewirkt. Der Reibschluss in Längsrichtung des Kanals kann durch das Aufbringen von Zurrkräften auf das Zurrelement bewirkt werden. Ohne diese Zurrkräfte ist der Reibschluss vorzugsweise vermindert oder aufgelöst, so dass sich das Zurrelement entlang des Kanals verschieben lässt.

Generell kann vorgesehen sein, dass bei dem Zurrelement der Zurranordnung zwischen dem Verankerungsabschnitt und dem Zurrösenabschnitt eine Ausnehmung zur Abstützung des Zurrelements in einer Gebrauchsstellung ausgebildet ist. Vorzugsweise weist das Zurrelement im Allgemeinen einen Verankerungsabschnitt und einen Zurrösenabschnitt auf. Der Verankerungsabschnitt kann einerseits mehrteilig, andererseits einteilig ausgebildet sein.

Jedenfalls ist bevorzugt vorgesehen, dass zwischen dem Verankerungsabschnitt und dem Zurrösenabschnitt eine Ausnehmung angeordnet ist, die es ermöglicht, das Zurrelement in einer Gebrauchsstellung abzustützen. Insbesondere kann die Ausnehmung mit einer Nase des Kanals zusammenwirken, die in die Öffnung des Kanals ragt. Die Nase kann in die Ausnehmung des Zurrelements eingreifen, so dass sich das Zurrelement mittels der Ausnehmung an der Nase abstützt. So können Zurrkräfte, die am Zurrösenabschnitt des Zurrelements anliegen, über die Ausnehmung des Zurrelements und die Nase des Kanals des Seitenwandschenkels in den Seitenwandschenkel eingetragen werden.

Bei der erfindungsgemäßen Zurranordnung ist die Vertiefung im Seitenwandschenkel vorzugsweise so ausgebildet, dass das Zurrelement in einer Ruhestellung vollständig darin aufgenommen ist. Insbesondere kann das Zurrelement in der Ruhestellung so in die Vertiefung aufgenommen sein, dass das Zurrelement nicht über die Innenseite des Seitenwandschenkels vorsteht. In einer Ruhestellung ist das Zurrelement also vollständig in den Seitenwandschenkel versenkt bzw. in der Vertiefung angeordnet. Damit ist sichergestellt, dass das Zurrelement in der Ruhestellung nicht in den Laderaum hineinragt und dort verfügbaren Raum zur Anordnung von Ladegütern verringert.

Besonders bevorzugt ist es bei einer Variante der erfindungsgemäßen Zurranordnung, wenn das Zurrelement zwischen dem Verankerungsabschnitt und dem Zurrösenabschnitt eine Ausnehmung aufweist, die in einer Gebrauchsstellung des Zurrelements mit einer vorstehenden Nase des Kanals zusammenwirkt, um Zurrkräfte auf die Bordwand zu übertragen. Das Zusammenwirken der Ausnehmung mit der Nase ermöglicht eine besonders gute Kraftübertragung und Abstützung für das Zurrelement, so dass eine sichere Ladungssicherung, beispielsweise mittels Zurrgurten, ermöglicht ist.

Ferner kann bei einer Ausführungsform der Zurranordnung vorgesehen sein, dass zwischen zwei in dem Kanal verankerten Zurrelementen zusätzliche Abstandshalter vorgesehen sind. Insgesamt können bei der Zurranordnung mehrere Zurrelemente in einen Kanal eines Seitenwandschenkels eingesetzt sein. Um sicherzustellen, dass zwischen diesen Zurrelementen ein ausreichender Mindestabstand besteht, können zusätzliche Abstandshalter vorgesehen sein. Die Abstandshalter können mit dem Kanal rastverbindbar sein.

Ferner können die Abstandshalter verhindern, dass ein Zurrelement gegen ein anderes Zurrelement gezogen wird, wenn beispielsweise eine Verzurrung von Ladung diagonal erfolgt. Wenn also Zurrkräfte auf das Zurrelement ausgeübt werden, die hauptsächlich eine Kraftkomponente in Längsrichtung des Kanals aufweisen, so besteht die Gefahr, dass das Zurrelement aufgrund der Zurrkräfte im Kanal verschoben wird. Die Abstandshalter können eine solche Verschiebung behindern bzw. blockieren, so dass damit auch sichergestellt wird, dass die Zurrelemente an einer für die Ladungssicherung bestmöglichen Position gehalten werden.

Ein weiterer nebengeordneter Aspekt der Erfindung betrifft ein Zurrelement für eine Bordwand der vorstehend beschriebenen Art, wobei das Zurrelement einen Verankerungsabschnitt aufweist, der in den Kanal der Bordwand einführbar und in dem Kanal verankerbar ist, so dass das Zurrelement in einer Ruhestellung entlang des Kanals verschiebbar und in einer Gebrauchsstellung im Kanal reibschlüssig und/oder formschlüssig fixierbar ist. Bei dem erfindungsgemäßen Zurrelement ist der Verankerungsabschnitt mit einem Zurrösenabschnitt einstückig ausgebildet und weist Außenkontur auf, die so angepasst ist, dass der Verankerungsabschnitt das Zurrelement im Zusammenwirken mit einer Innenkontur des Kanals des Seitenwandschenkels in dem Kanal hält. Das erfindungsgemäße Zurrelement umfasst ferner ein Rastelement, das federvorgespannt und gelenkig mit dem Verankerungsabschnitt verbunden ist.

Das federvorgespannte Rastelement kann beispielsweise zum Einsetzen des Zurrelements in den Kanal gegen eine Federkraft gegenüber dem Verankerungsabschnitt umgelenkt werden. Sobald der Verankerungsabschnitt in dem Kanal angeordnet ist, begibt sich das Rastelement aufgrund der Federvorspannung in eine Rastposition, so dass sich dann die formschlüssige und/oder reibschlüssige Fixierung des Zurrelements im Kanal ergibt. Auf diese Weise ist eine besonders einfache und sichere Positionierung des Zurrelements im Kanal der Bordwand möglich.

Die Erfindung wird im Folgenden anhand von Ausführungsbeispielen unter Bezugnahme auf die beigefügten schematischen Zeichnungen näher erläutert. Darin zeigen:
- Fig. 1: eine Querschnittsansicht einer erfindungsgemäßen Bordwand mit einem Zurrelement nach einem bevorzugten Ausführungsbeispiel, beim Einsetzen des Zurrelements;
- Fig. 2: eine perspektivische Darstellung des Zurrelements gemäß Fig. 1;
- Fig. 3: eine Querschnittsansicht der Bordwand gemäß Fig. 1, wobei das Zurrelement in einer Ruhestellung in den Kanal eingesetzt ist;
- Fig. 4: eine Querschnittsansicht der Bordwand gemäß Fig. 1 zur Bildung einer erfindungsgemäßen Zurranordnung, wobei das Zurrelement in einer Gebrauchsstellung in dem Kanal eingesetzt ist;
- Fig. 5: eine perspektivische Darstellung der Zurranordnung aus Bordwand und Zurrelement gemäß Fig. 4;
- Fig. 6: eine Querschnittsansicht der Bordwand gemäß Fig. 1 mit einem alternativen Zurrelement zur Bildung einer erfindungsgemäßen Zurranordnung;
- Fig. 7: eine perspektivische Ansicht des alternativen Zurrelements gemäß Fig. 6;
- Fig. 8: eine perspektivische Ansicht eines alternativen Zurrelements einer erfindungsgemäßen Zurranordnung nach einem bevorzugten Ausführungsbeispiel, wobei das Zurrelement einstückig aus einem Draht gebildet ist;
- Fig. 9: eine Querschnittsansicht einer erfindungsgemäßen Bordwand nach einem weiteren bevorzugten Ausführungsbeispiel, wobei das Zurrelement gemäß Fig. 8 in einer Ruhestellung in der Vertiefung der Bordwand angeordnet ist;
- Fig. 10: die Querschnittsdarstellung gemäß Fig. 9, wobei das Zurrelement in einer Gebrauchsstellung der Vertiefung der Bordwand angeordnet ist;
- Fig. 11: eine Querschnittsansicht einer erfindungsgemäßen Bordwand gemäß einem weiteren bevorzugten Ausführungsbeispiel, wobei der Kanal ein Kederprofil umfasst; und
- Fig. 12: eine perspektivische Querschnittsansicht der Bordwand gemäß Fig. 1, wobei zwischen zwei Zurrelementen Abstandshalter vorgesehen sind.

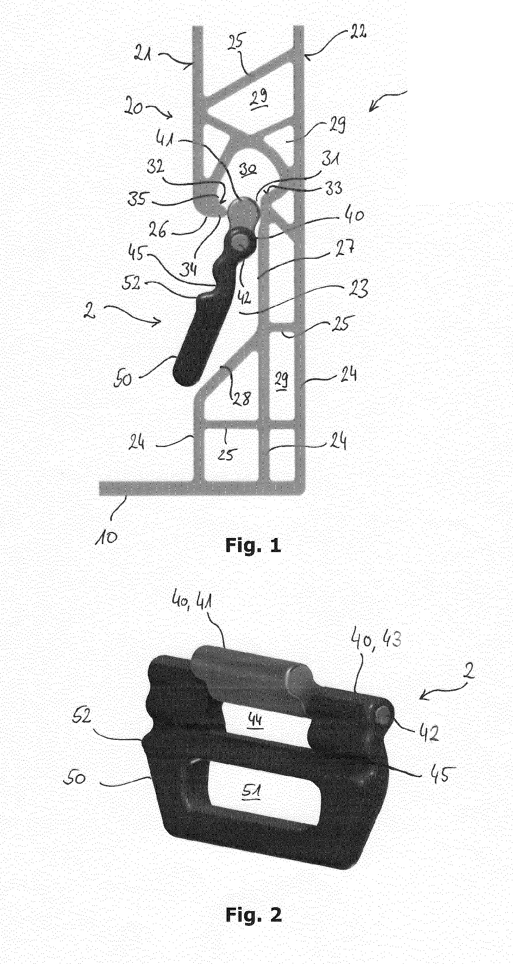

Fig. 1 zeigt eine Bordwand 1 im Querschnitt, wobei die Bordwand 1 einen Bodenschenkel 10 und einen Seitenwandschenkel 20 aufweist. Der Bodenschenkel 10 und der Seitenwandschenkel 20 sind rechtwinklig zueinander ausgerichtet. Der Seitenwandschenkel 20 umfasst eine Innenseite 21 und eine Außenseite 22. Die Außenseite 22 geht rechtwinklig in den Bodenschenkel 10 über. Der Bodenschenkel 10 begrenzt den Seitenwandschenkel 20 nach unten und erstreckt sich über die Innenseite 21 des Seitenwandschenkels 20 hinaus. Insgesamt weist die Bordwand 1 somit eine L-Form auf.

Der Seitenwandschenkel 20 ist vorzugsweise aus mehrere Längsstegen 24 und Querstegen 25 aufgebaut. Als Längsstege 24 werden im Rahmen der vorliegenden Anmeldung im Wesentlichen diejenigen Wandungselemente des Seitenwandschenkels 20 bezeichnet, die senkrecht zum Bodenschenkel 10 ausgerichtet sind. Zwischen den Längsstegen 24 erstrecken sich Querstege 25. Die Querstege 25 können parallel zum Bodenschenkel 10 ausgerichtet sein.

Es sind jedoch auch Querstege 25 vorhanden, die schräg bzw. winklig zum Bodenschenkel 10 ausgerichtet sind.

Insgesamt weist der Seitenwandschenkel 20 eine Querschnittskontur auf, die einer Fachwerkstruktur ähnelt. Zwischen den Längsstegen 24 und den Querstegen 25 sind insoweit entsprechende Hohlkammern 29 ausgebildet. Der Seitenwandschenkel 20 bildet in seiner Gesamtheit ein Hohlkammerprofil.

In dem Seitenwandschenkel 20 ist eine Vertiefung 23 angeordnet, die von der Innenseite 21 ausgeht. Die Vertiefung erstreckt sich vorzugsweise über die gesamte Länge des Seitenwandschenkels 20. Die an der Innenwandseite 21 angeordnete Vertiefung 23 weist im Wesentlichen eine obere Begrenzung 26, eine hintere Begrenzung 27 und eine untere Begrenzung 28 auf. Die untere Begrenzung 28 ist durch einen schräg zum Bodenschenkel 10 ausgerichteten Quersteg 25 des Seitenwandschenkels 20 gebildet. Die hintere Begrenzung 27 ist durch einen senkrecht zum Bodenschenkel 10 verlaufenden Längssteg 24 gebildet. Oberhalb der oberen Begrenzung 26 ist ein Kanal 30 im Seitenwandschenkel 20 ausgebildet. Der Kanal 30 weist eine Öffnung 31 und eine an die Öffnung angrenzende Nase 34 auf. Die Nase 34 und die Öffnung 31 bilden im Wesentlichen die obere Begrenzung 26 der Vertiefung 23.

Der Kanal 30, der insbesondere oberhalb der Vertiefung 23 am Seitenwandschenkel 20 ausgebildet ist, ist im Wesentlichen durch gewölbte Querstege 25 des Seitenwandschenkels 20 begrenzt. Im unteren Bereich umfasst der Kanal 30 die Öffnung 31. Die Öffnung 31 ist zur Vertiefung 23 hin geöffnet bzw. mündet in die Vertiefung 23. Konkret mündet die Öffnung 31 in Richtung des Bodenschenkels 10 in die Vertiefung 23.

Der Kanal 30 weist eine Querschnittskontur auf, die im Wesentlichen an die Form eines Nockens erinnert, wie sie von Nocken einer Nockenwelle eines Verbrennungsmotors, insbesondere eines Hubkolbenmotors, bekannt sind.

Im Wesentlichen weist der Kanal 30 eine Spitze 35 auf, die schräg nach unten in Richtung des Bodenschenkels 10 weist. Die Spitze wird durch die Nase 34 begrenzt, die ausgehend von der Innenseite 21 des Seitenwandschenkels zur hinteren Begrenzung 27 der Vertiefung 23 zeigt.

Die Nase 34 begrenzt die Öffnung 31. Der Quersteg 25, der die hintere Begrenzung 27 der Vertiefung 23 bildet, bildet die gegenüberliegende Begrenzung der Öffnung 31. Die Öffnung 31 erstreckt sich vorzugsweise über die gesamte Länge des Kanals 30. Insofern kann die Öffnung 31 einen entlang des Kanals 30 verlaufenden Schlitz bilden. Insgesamt kann sich der Kanal 30 mit der Öffnung 31 über die gesamte Länge des Seitenwandschenkels 20 erstrecken.

Ein wesentlicher Vorteil der Erfindung wird dadurch erreicht, dass, wie es in Fig. 1 gezeigt ist, zwei Innenflächen 32, 33 des Kanals 30 schräg zur Öffnung 31 hin geneigt sind. Konkret weist der Kanal 30 eine erste Innenfläche 32 auf, die einerseits die Spitze 35 und andererseits die Nase 34 umfasst. Eine zweite Innenfläche 33 grenzt gegenüber der Nase 34 an die Öffnung 31 an. Die erste Innenfläche 32 und die zweite Innenfläche 33 sind zur Öffnung 31 hin geneigt, so dass sie zum Bodenschenkel 10 winklig angeordnet sind. Diese Neigung sorgt dafür, dass in den Kanal 30 eintretendes, feinkörniges Schüttgut einfach, insbesondere unter Schwerkrafteinfluss, aus dem Kanal 30 herausrieseln kann.

Im Übrigen verläuft auch die untere Begrenzung 28 der Vertiefung 23 schräg bzw. winklig zum Bodenschenkel 10, damit aus dem Kanal 30 herausrieselndes Schüttgut auf den Ladeboden geleitet wird. Der Ladeboden ist vorzugsweise auf dem Bodenschenkel 10 montiert. Insbesondere kann vorgesehen sein, dass ein Ladeboden auf dem Bodenschenkel 10 angeordnet ist, dessen Höhe im Wesentlichen dem Abstand zwischen der unteren Begrenzung 28 und dem Bodenschenkel 10 entspricht oder jedenfalls nicht übersteigt. Der Ladeboden kann auch eine kleinere Höhe aufweisen.

In Fig. 2 ist ein Zurrelement 2 gezeigt, wie es vorzugsweise in Kombination mit der Bordwand 1 gemäß Fig. 1 verwendet wird. Gemeinsam können das Zurrelement 2 und die Bordwand 1 eine Zurranordnung bilden.

Das Zurrelement 2 gemäß Fig. 2 umfasst einen Verankerungsabschnitt 40 und einen Zurrösenabschnitt 50. Der Zurrösenabschnitt 50 weist eine Öse 51 auf. Die Öse 51 ist als Langloch mit einer im Wesentlichen rechteckigen Kontur ausgebildet, wobei die Ecken des Rechtecks stark abgerundet sind. Die Öse 51 dient dazu, einen Zurrgurt, eine Zurrkette oder ein ähnliches Zurrmittel mit dem Zurrelement 2 zu verbinden. Insbesondere kann ein Zurrgurt in die Öse 51 eingehakt oder durch die Öse 51 geschlauft werden.

Oberhalb des Zurrösenabschnitts 50 befindet sich eine Ausnehmung 45. Die Ausnehmung 45 begrenzt den Zurrösenabschnitt 50. Zur Ausnehmung 45 hin weist der Zurrösenabschnitt 50 eine Auswölbung 52 auf, die eine verbesserte Abstützung des Zurrösenabschnitts 50 an dem Seitenwandschenkel 20 der Bordwand 1 ermöglicht. Die Ausnehmung 45 dient ebenfalls zur Abstützung des Zurrelements 2 an der Bordwand 1. Die Funktionsweise wird später näher erläutert.

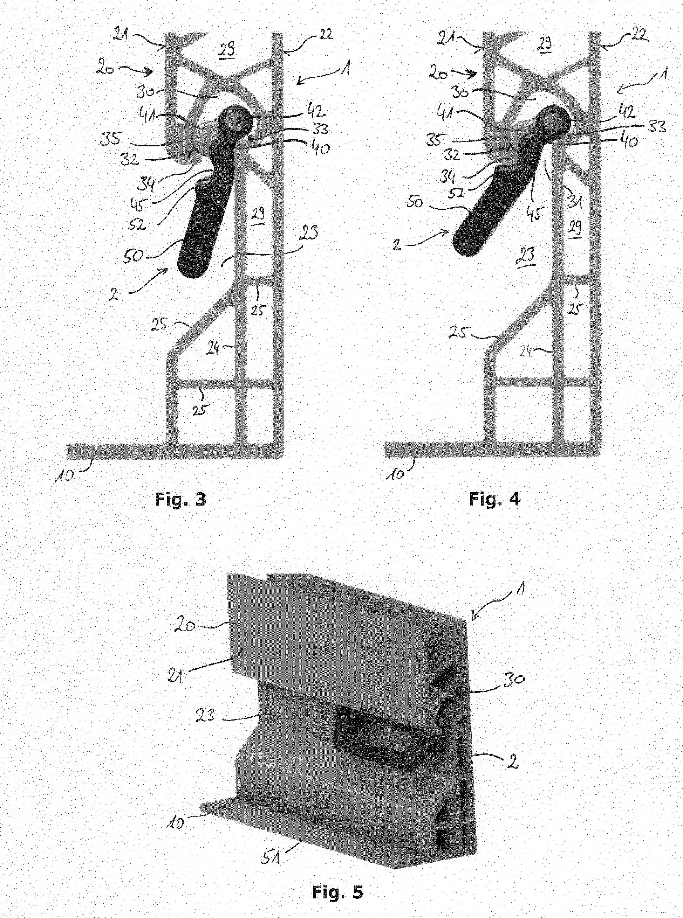

Oberhalb grenzt an die Ausnehmung 45 der Verankerungsabschnitt 40 an. Bei dem Ausführungsbeispiel des Zurrelements 2 gemäß Fig. 2 weist das Zurrelement 2 ein Rastelement 41 auf, das über eine Achse 42 gelenkig in zwei Achsaufnahmen 43 des Verankerungsabschnitts 40 gelagert ist. Zwischen den Achsaufnahmen 43 ist ein Freiraum 44 ausgebildet, der das Rastelement 41 aufnimmt. Das Rastelement 41 ist um die Achse 42 drehbar gelagert. Insbesondere kann das Rastelement 41 federvorgespannt sein, wobei in der Achse 42 eine entsprechende Feder, vorzugsweise eine Torsionsfeder, angeordnet sein kann. Die Federvorspannung des Rastelements 41 sorgt dafür, dass sich das Rastelement 41 selbstständig in eine winklige Anordnung begibt, wobei das Rastelement 41 in einem Winkel zum Zurrösenabschnitt 50 steht. Vorzugsweise ist die Federvorspannung so ausgerichtet, dass sich zwischen dem Zurrösenabschnitt 50 und dem Rastelement 41 ein rechter oder spitzer Winkel ergibt, wie er beispielsweise in Fig. 3 erkennbar ist. Insbesondere kann der Winkel zwischen dem Zurrösenabschnitt und dem Rastelement 41 zwischen 50° und 90°, vorzugsweise zwischen 60° und 70°, betragen.

In Fig. 3 ist das Rastelement 41 in einer von der Federvorspannung vorgegebenen Position gezeigt. Ohne Krafteinwirkung auf das Rastelement 41 nimmt das Rastelement 41 also etwa den gezeigten Winkel zum Zurrösenabschnitt 50 ein.

Zum Einsetzen des Zurrelements 2 in den Kanal 30 der Bordwand 1 wird das Rastelement 41 gegen die Federvorspannung ausgelenkt, so dass der Winkel zwischen dem Rastelement 41 und dem Zurrösenabschnitt 50 stumpf wird. Dies ist in Fig. 1 gezeigt. Das Rastelement 41 wird dann in die Öffnung 31 eingeführt. Das Zurrelement 42 kann weiter in den Kanal 30 eingeschoben werden, bis das Rastelement vollständig in dem Kanal 30 angeordnet ist. Wegen der Federvorspannung klappt das Rastelement 41 nach Durchtritt durch die Öffnung 31 in seine von der Feder vorgegebene Winkelposition zurück, so dass es in Anlage an die Innenkontur des Kanals 30 gelangt. An der Innenkontur gleitet das Rastelement 41 entlang, bis es in der Spitze 35 zu liegen kommt (Fig. 3). Das Rastelement 41 stützt sich dabei an der Nase 34 ab. Durch diesen Bewegungsablauf gelangen auch die Achsaufnahmen 43 des Verankerungsabschnitts 40 in den Kanal 30. Der Verankerungsabschnitt 40 wird so insgesamt in den Kanal 30 eingesetzt. Dies ist in Fig. 3 und 4 erkennbar. In der eingesetzten Position stützt sich der Verankerungsabschnitt 40 einerseits an der Spitze 35 bzw. Nase 34 bzw. an der ersten Innenfläche 32 des Kanals 30 ab. Ebenso stützt sich der Verankerungsabschnitt 40 auf der zweiten Innenfläche 32 des Kanals 30 ab. Auf diese Weise ist das Zurrelement 2 in dem Kanal 30 fest verankert und insbesondere form- und/oder reibschlüssig gehalten.

In Fig. 3 ist das Zurrelement 2 gezeigt, wie es in den Kanal 30 der Bordwand 1 eingesetzt ist. Dabei nimmt das Zurrelement 2 eine Ruhestellung ein, wobei die Federvorspannung des Rastelements 41 dazu führt, dass das Zurrelement 2 zur hinteren Begrenzung 27 der Vertiefung 23 hin geklappt ist. Es ist gut erkennbar, dass das Zurrelement 2 in der Ruhestellung vollständig in der Vertiefung 23 angeordnet ist. Insbesondere ragt das Zurrelement 2 nicht über die Innenseite 21 des Seitenwandschenkels 20 vor. Damit bleibt die gesamte Ladefläche bzw. das gesamte Ladevolumen des Nutzfahrzeugs bis zur Innenseite 21 verfügbar. Das Zurrelement 2 schränkt also die Beladekapazität eines Nutzfahrzeugs nicht ein.

Fig. 4 zeigt das Zurrelement 2 in einer Gebrauchsstellung. In der Gebrauchsstellung ist das Zurrelement 2 so ausgelenkt, dass es über die Innenseite 21 des Seitenwandschenkels 20 vorsteht und damit leicht zugänglich ist. Die Gebrauchsstellung wird dann eingenommen, wenn in die Öse 51 des Zurrösenabschnitts 50 ein Zurrmittel eingesetzt werden soll. Das kann beispielsweise ein Zurrgurt sein, der in die Öse 51 eingehakt wird.

Um die Gebrauchsstellung einzunehmen, wird das Zurrelement 2 aus der Vertiefung 23 heraus geneigt, wobei sich der Abstand zwischen der Öse 51 und der hinteren Begrenzung 27 der Vertiefung 23 erhöht. Dabei gelangt die Ausnehmung 45 in Anlage zur Nase 34. Die Ausnehmung 45 stützt sich also an der Nase 34 ab. Ebenso stützt sich die Auswölbung 52 an der Nase 34 ab. Ein in die Öse 51 eingreifendes Zurrmittel überträgt nun Kräfte auf den Zurrösenabschnitt 50, wobei diese Kräfte über die Ausnehmung 45 und die Auswölbung 52 in die Nase 34 eingeleitet werden. Von dort verlaufen die Kräfte entlang der Längsstege 24 und Querstege 25, so dass der Seitenwandschenkel 20 die Zurrkräfte aufnimmt.

In Fig. 4 ist zudem erkennbar, dass durch das drehgelenkige Ausklappen des Zurrelements 2 zwischen dem Zurrelement 2 und der unteren Begrenzung 28 der Vertiefung 23 ein größerer Abstand entsteht, der es ermöglicht, dass ein Zurrmittel einfach in die Öse 51 eingeführt werden kann.

In Fig. 4 ist nochmal deutlich erkennbar, dass sich der Kanal 30 mit seiner Öffnung 31 vorzugsweise über die gesamte Länge der Bordwand 1 erstreckt. Das Zurrelement 2 kann so an beliebigen Stellen entlang der Bordwand 1 fixiert werden. Dies ermöglicht eine besonders hohe Flexibilität bei der Verzurrung von Ladungsgütern in einem Nutzfahrzeug.

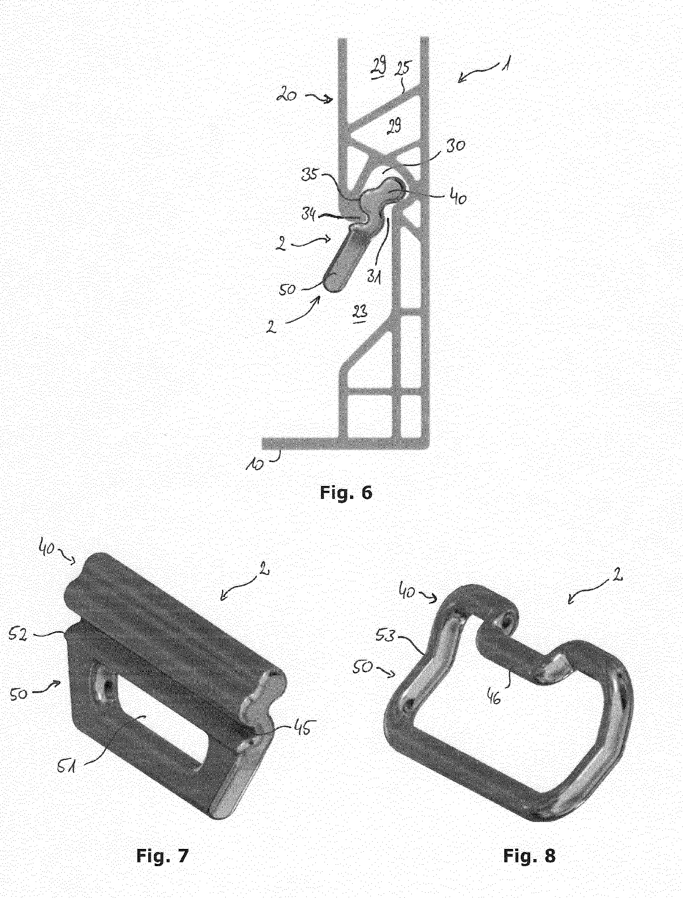

In Fig. 6 ist die Bordwand nochmals im Querschnitt dargestellt. Im Wesentlichen entspricht die Bordwand strukturell der Bordwand gemäß Fig. 1. Fig. 6 zeigt nun ein Ausführungsbeispiel einer Zurranordnung, bei welcher in diese Bordwand 1 ein alternatives Zurrelement 2 eingesetzt ist. Im Unterschied zu dem Zurrelement 2 gemäß Fig. 2 ist das Zurrelement 2 gemäß Fig. 6 einstückig bzw. monolithisch ausgebildet. Konkret zeigt Fig. 6 eine Querschnittsansicht der Bordwand 1 gemäß Fig. 1, wobei ein Zurrelement 2 gemäß Fig. 7 eingesetzt ist.

Das Zurrelement 2 gemäß Fig. 7 ist einstückig ausgebildet und weist ebenfalls einen Zurrösenabschnitt 50 und einen Verankerungsabschnitt 40 auf. Der Zurrösenabschnitt 50 ist vom Verankerungsabschnitt 40 durch eine Ausnehmung 45 getrennt. An die Ausnehmung 45 grenzt eine Auswölbung 52 an, die dem Zurrösenabschnitt 50 zugeordnet ist. Die Auswölbung 52 stellt eine vergrößerte Anlagefläche zur Nase 34 bereit, so dass eine gute Kraftübertragung vom Zurrelement 2 auf die Bordwand 1 gewährleistet ist. Der Verankerungsabschnitt 40 weist im Wesentlichen eine Außenkontur auf, die an die Zahl "8" erinnert. Dabei ist die "8" etwas schräg zum Zurrösenabschnitt 50 angewinkelt. Jedenfalls ist der Verankerungsabschnitt 40 derart gestaltet, dass er sich in den Kanal 30 über die Öffnung 31 einsetzen und in dem Kanal 30 verankern lässt.

Die Verankerung erfolgt analog zu dem Zurrelement 2 gemäß Fig. 2. Insbesondere stützt sich der Verankerungsabschnitt 40 im eingesetzten Zustand, wie er in Fig. 6 dargestellt ist, an der Spitze 35 bzw. Nase 34 bzw. ersten Innenfläche 32 des Kanals 30 einerseits ab. Andererseits stützt sich der Verankerungsabschnitt 40 im eingesetzten Zustand an der zweiten Innenfläche 33 des Kanals 30 ab. Fig. 6 zeigt die Gebrauchsstellung des Zurrelements 2, wobei die Ausnehmung 45 an der Nase 34 anliegt. Das Zurrelement 2 steht insoweit über die Innenseite 21 des Seitenwandschenkels 20 vor.

In Fig. 8 ist eine weitere Alternative eines Zurrelements 2 gezeigt. Dabei handelt es sich ebenfalls um ein einstückig ausgebildetes Zurrelement 2, das sich in seiner Funktionsweise nicht von dem Zurrelement gemäß Fig. 7 unterscheidet. Im Unterschied zu dem Zurrelement gemäß Fig. 7, das einstückig, beispielsweise als Gussteil oder Stranggussteil ausgebildet ist, ist das Zurrelement 2 gemäß Fig. 8 aus einem Draht gebogen. Der Draht begrenzt einerseits eine Öse 51, die in diesem Fall auch bis in den Verankerungsabschnitt 40 reicht. Der Verankerungsabschnitt 40 weist einen Rastabschnitt 46 auf, der durch eine U-förmige Drahtbiegung gebildet ist. Der Rastabschnitt 46 bzw. die U-förmige Drahtbiegung stützt sich im Gebrauchszustand an der ersten Innenfläche 32 des Kanals 30 ab. Das Zurrelement 2 gemäß Fig. 8 ist aufgrund seiner einfachen Bauweise besonders kostengünstig herstellbar.

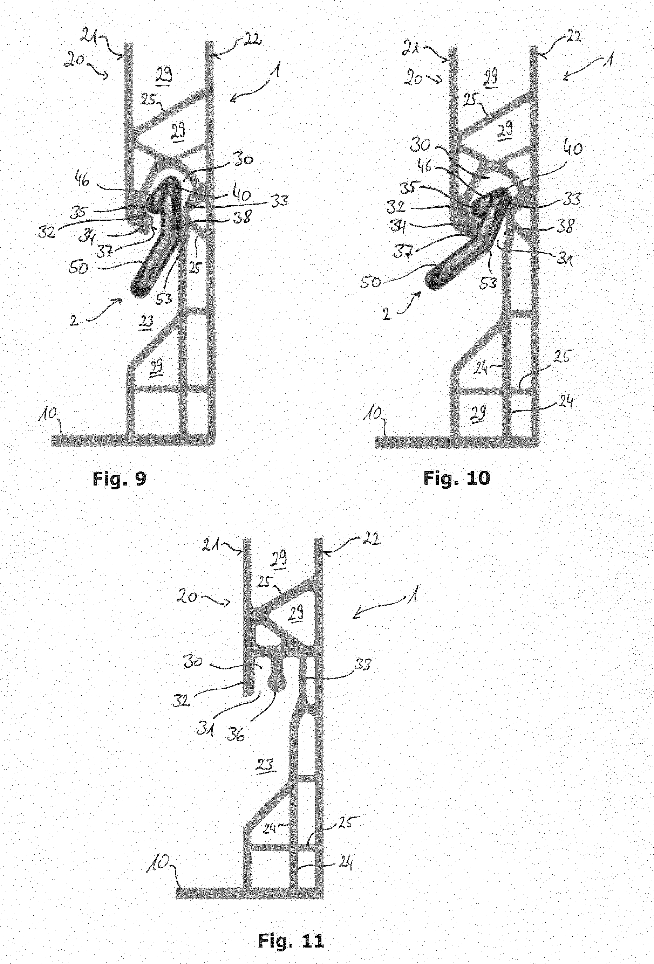

Fig. 9 zeigt das Zurrelement gemäß Fig. 8 in Kombination mit einer Bordwand 1. Die Bordwand 1 weist analog zu der Bordwand 1 gemäß Fig. 1 einen Bodenschenkel 10 und einen Seitenwandschenkel 20 auf. Der Seitenwandschenkel 20 ist im Wesentlichen analog zum Seitenwandschenkel 20 gemäß Fig. 1 aufgebaut. Ein Unterschied besteht jedoch darin, dass die Nase 34, die an die Öffnung 31 des Kanals 30 angrenzt, eine dickere Wandstärke aufweist. Insbesondere weist die Nase 34 eine gerade Anlagefläche 37 auf, an welcher sich der Verankerungsabschnitt 40 des Zurrelements 2 abstützen kann. Ein weiterer Unterschied besteht darin, dass die hintere Begrenzung 27 der Vertiefung 23 in einem oberen Bereich, der der Nase 34 gegenüberliegt, einen Versatz 38 aufweist. Der Längssteg 24, der die hintere Begrenzung 27 bildet, ist insbesondere zur Außenseite 22 hin versetzt, so dass sich eine Auflagefläche für den Verankerungsabschnitt 40 des Zurrelements 2 bildet.

Das Zurrelement 2 gemäß Fig. 8 weist einen Verankerungsabschnitt 40 und einen Zurrösenabschnitt 50 auf. Der Zurrösenabschnitt 50 ist durch einen Knick 53 vom Verankerungsabschnitt 40 getrennt. In der Seitenansicht des Zurrelements 2, wie es in Fig. 9 und 10 dargestellt ist, weist der Verankerungsabschnitt 40 im Wesentlichen eine Hakenform auf. Dabei ist die Hakenform vorzugsweise so gestaltet, dass der Verankerungsabschnitt in einer Ruhestellung des Zurrelements (Fig. 9) einerseits an der Spitze 35 des Kanals 30 bzw. der ersten Innenfläche 32 und andererseits an dem Versatz 38 abgestützt ist. Damit ist das Zurrelement 2 in der Ruhestellung fest, jedoch verschiebbar, in dem Kanal 30 gehalten. Das Zurrelement 2, insbesondere der Zurrösenabschnitt 50 ist dabei vollständig in der Vertiefung 23 versenkt, so dass das Zurrelement 2 nicht über die Innenseite 21 des Seitenwandschenkels 20 vorsteht.

In einer Gebrauchsstellung stützt sich der Verankerungsabschnitt 40 des Zurrelements 2 weiterhin an der Spitze 35 bzw. der ersten Innenfläche 32 ab. Gleichzeitig liegt der Verankerungsabschnitt 40 an der Anlagefläche 37 der Nase 34 an, so dass Zurrkräfte in die Bordwand 1 eingetragen werden können. Im Unterschied zur Ruhestellung erfolgt jedoch keine Abstützung des Verankerungsabschnitts 40 an dem Versatz 38. Vielmehr stützt sich der Verankerungsabschnitt 40 nun an der zweiten Innenfläche 32 des Kanals 30 ab (Fig. 10). Dabei ist das Zurrelement 2 so aus der Vertiefung 23 herausgelenkt, dass der Zurrösenabschnitt 50 über die Innenseite 21 des Seitenwandschenkels 20 vorsteht.

Das Zurrelement 2 gemäß Fig. 8 kann so gestaltet sein, dass der Draht so flexibel ist, dass sich der Verankerungsabschnitt 40 durch Verbiegen des U-förmigen Rastabschnitts 46 durch die Öffnung 31 in den Kanal 30 einsetzen lässt. Alternativ kann vorgesehen sein, dass das Zurrelement 2 aus einem derart steifen Draht gebildet ist, dass sich das Zurrelement 2 an einem Längsende des Kanals 30 in diesen über eine längsseitige Öffnung einsetzen lässt. In diesem Fall sind dann vorzugsweise mehrere Zurrelemente 2 fest mit der Bordwand 1 verbunden, können jedoch entlang des Kanals 30 an unterschiedliche Positionen geschoben werden.

Letzteres gilt auch für das Zurrelement 2 gemäß Fig. 7. Das einstückige Zurrelement 2 ist vorzugsweise fest, aber längsverschiebbar, in dem Kanal 30 angeordnet. Insbesondere können die Zurrelemente 2 gemäß Fig. 7 und 8 bereits bei Auslieferung in entsprechender bzw. vorgewählter Anzahl in dem Kanal 30 angeordnet sein. Der Nutzer kann jedoch weiterhin durch Verschieben der Zurrelemente 2 deren Position in Längsrichtung der Bordwand 1 festlegen.

In Fig. 11 ist ein alternatives Ausführungsbeispiel einer Bordwand 1 gezeigt, die es ermöglicht, Zurrelemente 2 an unterschiedlichen Längspositionen entlang der Bordwand anzuordnen und zu fixieren. Die Bordwand 1 umfasst einen Kanal 30, dessen erste Innenfläche 32 und dessen zweite Innenfläche 33 im Wesentlichen senkrecht zum Bodenschenkel 20 ausgerichtet sind. Der Kanal 30 weist insofern eine vergleichsweise breite Öffnung 31 auf, die in Richtung des Bodenschenkels 10 in die Vertiefung 23 mündet. Im Übrigen ist der Seitenwandschenkel 20 analog zu den übrigen Ausführungsbeispielen als Hohlkammerprofil ausgebildet. Insbesondere weist der Seitenwandschenkel 20 im Querschnitt eine Fachwerkstruktur auf, die aus Längsstegen 24 und Querstegen 25 gebildet ist. Die Vertiefung 23 umfasst eine untere Begrenzung 28, die durch einen schräg verlaufenden Quersteg 25 gebildet ist. Ferner ist die Vertiefung 23 durch eine hintere Begrenzung 27 begrenzt, die durch einen Längssteg 24 gebildet ist. Die obere Begrenzung 26 der Vertiefung 23 ist durch die Öffnung 31 des Kanals 30 gebildet.

Im Unterschied zu den vorherigen Ausführungsbeispielen ist bei der Bordwand 1 gemäß Fig. 11 im Kanal 30 ein Kederprofil 36 vorgesehen. Das Kederprofil 36 ermöglicht es, ein entsprechendes Zurrelement 2 aufzunehmen, das ein zum Kederprofil 36 korrespondierendes Negativprofil aufweist. Entlang des Kederprofils 36 kann das Zurrelement 2 an unterschiedliche Positionen entlang der Bordwand 1 verschoben werden.

Das Zurrelement 2 kann ein Drehgelenk zwischen dem Verankerungsabschnitt 40 und dem Zurrösenabschnitt 50 aufweisen. Mittels des Drehgelenks kann der Zurrösenabschnitt 50 aus der Vertiefung 23 ausgeklappt werden, um ein Zurrmittel daran zu befestigen. Das Drehgelenk kann dazu als einfaches Drehgelenk, insbesondere ohne Federvorspannung, ausgeführt sein. Ein solches Drehgelenk kann so leichtgängig sein, dass das Zurrelement 2 in der Ruhestellung schwerkraftbedingt senkrecht nach unten hängt, sodass es vollständig in der Vertiefung 23 angeordnet ist.

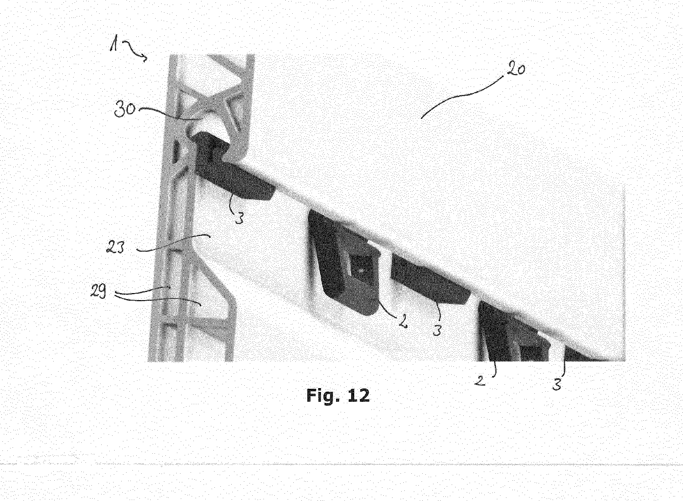

In Fig. 12 ist in perspektivischer Darstellung nochmals eine Bordwand 1 dargestellt, in die Zurrelemente 2 eingesetzt sind. Die Bordwand 1 weist dazu einen Kanal 30 auf, in den mehrere Zurrelemente 2 gemäß Fig. 7 eingesetzt sind. Es ist erkennbar, dass die Zurrelemente 2 in einer Ruhestellung in der Vertiefung 23 vollständig versenkt angeordnet sind, also nicht über die Innenseite 21 des Seitenwandschenkels 20 vorstehen.

Generell kann die Zurranordnung die Bordwand 1 und mehrere Zurrelemente 2 aufweisen. Dabei können jeweils gleiche Zurrelemente 2 oder verschiedene Zurrelemente 2 vorgesehen sein. Beispielsweise ist es möglich, dass eine Bordwand mit fest vormontierten Zurrelementen 2 gemäß mindestens einem der Ausführungsbeispiele nach Fig. 7 oder 8 ausgeliefert wird und der Nutzer bedarfsweise noch ein oder mehrere Zurrelemente 2 gemäß Fig. 2 hinzufügt.

Beim Verzurren von Ladungsgütern ergibt sich oftmals die Schwierigkeit, dass die Zurrkräfte nicht senkrecht zum Seitenwandschenkel 20 aufgebracht werden. Teilweise werden Ladungsgüter auch diagonal verspannt, so dass auf die Zurrelemente 2 auch Längskräfte ausgeübt werden. Wenn diese Längskräfte zu groß werden, besteht die Gefahr, dass die im Kanal 30 verschiebbaren Zurrelemente 2 ihre Position im Kanal 30 nicht beibehalten, sondern entlang des Kanals 30 aufgrund der Zurrkräfte verschoben werden. Dies kann dazu führen, dass die Ladungssicherung nicht mehr sicher gewährleistet ist.

Um ein solches Verschieben der Zurrelemente 2 entlang des Kanals 30 zu vermeiden, sind bei dem Ausführungsbeispiel gemäß Fig. 12 zusätzliche Abstandshalter 3 vorgesehen, die mit dem Kanal 30 rastverbindbar sind. Die Abstandshalter 3 sind vorzugsweise aus einem Kunststoffmaterial gefertigt. Das Kunststoffmaterial kann einen hohen Reibwert aufweisen. Die Abschnittshalter 3 werden insbesondere in dem Kanal 30 verklemmt, so dass sie einen hohen Reibschluss bilden, der eine Bewegung eines Zurrelements 2 entlang des Kanals 30 begrenzt. Insofern kann ein Zurrelement 2 zwischen zwei Abstandshaltern 3 angeordnet sein, wobei die Abstandshalter 3 die Bewegungsfreiheit des Zurrelements in Längsrichtung des Kanals 30 begrenzen.

Für alle Ausführungsbeispiele gilt, dass die Bordwand 1 vorzugsweise als Aluminium-Stranggussprofil ausgebildet ist. Das ermöglicht eine besonders kostengünstige Herstellung der Bordwand 1. Die Zurrelemente 2 sind vorzugsweise aus Metall, insbesondere Stahl, vorzugsweise Edelstahl, gebildet. Die Abstandshalter 3 sind vorzugsweise aus Kunststoff gefertigt, insbesondere aus einem Kunststoff mit einem hohen Reibwert.

### Bezugszeichenliste

- 1: Bordwand
- 2: Zurrelement
- 3: Abstandshalter
- 10: Bodenschenkel
- 20: Seitenwandschenkel
- 21: Innenseite
- 22: Außenseite
- 23: Vertiefung
- 24: Längssteg
- 25: Quersteg
- 26: obere Begrenzung
- 27: hintere Begrenzung
- 28: untere Begrenzung
- 29: Hohlkammer
- 30: Kanal
- 31: Öffnung
- 32: erste Innenfläche
- 33: zweite Innenfläche
- 34: Nase
- 35: Spitze
- 36: Kederprofil
- 37: Anlagefläche
- 38: Versatz
- 40: Verankerungsabschnitt
- 41: Rastelement
- 42: Achse
- 43: Achsaufnahme
- 44: Freiraum
- 45: Ausnehmung
- 46: Rastabschnitt
- 50: Zurrösenabschnitt
- 51: Öse
- 52: Auswölbung
- 53: Knick

## Patentansprüche

1. Bordwand (1) eines Nutzfahrzeugs, insbesondere eines Fahrzeuganhängers, mit einem Bodenschenkel (10) und einem Seitenwandschenkel (20), wobei der Seitenwandschenkel (20) eine Innenseite (21) aufweist, an der wenigstens eine Vertiefung (23) vorgesehen ist, wobei in der Vertiefung (23) wenigstens ein Kanal (30) zur Befestigung und Führung eines Zurrelements (2) angeordnet ist, wobei der Kanal (30) eine Öffnung (31) aufweist, die in Richtung des Bodenschenkels (10) in die Vertiefung (23) mündet,
**dadurch gekennzeichnet, dass**
an die Öffnung (31) angrenzende Innenflächen (32, 33) des Kanals (30) zur Öffnung (31) hin geneigt sind.

2. Bordwand (1) nach Anspruch 1,
**dadurch gekennzeichnet, dass**
der Kanal (30) eine nockenförmige Querschnittskontur aufweist.

3. Bordwand (1) nach einem der vorhergehenden Ansprüche,
**dadurch gekennzeichnet, dass**
der Kanal (30) eine in die Öffnung (31) ragende Nase (34) umfasst, die eine Abstützung für einen Verankerungsabschnitt (40) des Zurrelements (2) bildet.

4. Bordwand (1) nach einem der vorhergehenden Ansprüche,
**dadurch gekennzeichnet, dass**
der Seitenwandschenkel (20) als Hohlkammerprofil ausgebildet ist.

5. Bordwand (1) nach einem der vorhergehenden Ansprüche,
**dadurch gekennzeichnet, dass**
der Seitenwandschenkel (20) mit dem Bodenschenkel (10) einstückig als Aluminium-Stranggussprofil ausgebildet ist

6. Bordwand (1) nach einem der vorhergehenden Ansprüche,
**dadurch gekennzeichnet, dass**
in dem Kanal (30) ein Kederprofil (36) ausgebildet ist.

7. Bordwand (1) nach einem der vorhergehenden Ansprüche,
**dadurch gekennzeichnet, dass**
sich die Vertiefung (23) und der Kanal (30) in Längsrichtung über die gesamte Länge des Seitenwandschenkels (20) erstrecken.

8. Zurranordnung mit einem Zurrelement (2) und einer Bordwand (1) nach einem der vorhergehenden Ansprüche, wobei das Zurrelement (2) einen Verankerungsabschnitt (40) aufweist, der in den Kanal (30) einführbar und in dem Kanal (30) verankerbar ist, so dass das Zurrelement (2) in einer Ruhestellung entlang des Kanals (30) verschiebbar und in einer Gebrauchsstellung im Kanal (30) reibschlüssig und/oder formschlüssig fixierbar ist,
**dadurch gekennzeichnet, dass**
der Verankerungsabschnitt (40) mit einem Zurrösenabschnitt (50) einstückig ausgebildet ist und eine Außenkontur aufweist, die so angepasst ist, dass der Verankerungsabschnitt (40) das Zurrelement (2) im Zusammenwirken mit einer Innenkontur des Kanals (30) des Seitenwandschenkels (20) in dem Kanal (30) hält.

9. Zurranordnung nach Anspruch 8,
**dadurch gekennzeichnet, dass**
zwischen dem Verankerungsabschnitt (40) und einem/dem Zurrösenabschnitt (50) eine Ausnehmung (45) zur Abstützung des Zurrelements (2) in einer Gebrauchsstellung ausgebildet ist.

10. Zurranordnung nach Anspruch 8 oder 9,,
**dadurch gekennzeichnet, dass**
die Vertiefung (23) so ausgebildet ist, dass das Zurrelement (2) in einer Ruhestellung vollständig darin aufgenommen ist, insbesondere so dass das Zurrelement (2) nicht über die Innenseite (21) des Seitenwandschenkels (20) vorsteht.

11. Zurranordnung nach einem der Ansprüche 8 bis 10,
**dadurch gekennzeichnet, dass**
das Zurrelement (2) zwischen dem Verankerungsabschnitt (40) und dem Zurrösenabschnitt (50) eine Ausnehmung (45) aufweist, die in einer Gebrauchsstellung des Zurrelements (2) mit einer vorstehenden Nase (34) des Kanals (30) zusammenwirkt, um Zurrkräfte auf die Bordwand (1) zu übertragen.

12. Zurranordnung nach einem der Ansprüche 8 bis 11,
**dadurch gekennzeichnet, dass**
zwischen zwei in dem Kanal (30) verankerten Zurrelementen (2) zusätzlich Abstandshalter (10) vorgesehen sind, die mit dem Kanal (30) rastverbindbar sind.

13. Zurrelement (2) für eine Bordwand (1) nach einem der Ansprüche 1 bis 7, aufweisend einen Verankerungsabschnitt (40), der in den Kanal (30) einführbar und in dem Kanal (30) verankerbar ist, so dass das Zurrelement (2) in einer Ruhestellung entlang des Kanals (30) verschiebbar und in einer Gebrauchsstellung im Kanal (30) reibschlüssig und/oder formschlüssig fixierbar ist, wobei der Verankerungsabschnitt (40) mit einem Zurrösenabschnitt (50) einstückig ausgebildet ist und eine Außenkontur aufweist, die so angepasst ist, dass der Verankerungsabschnitt (40) das Zurrelement (2) im Zusammenwirken mit einer Innenkontur des Kanals (30) des Seitenwandschenkels (20) in dem Kanal (30) hält,
**dadurch gekennzeichnet, dass**
ein Rastelement (41) vorgesehen ist, das federvorgespannt und gelenkig mit dem Verankerungsabschnitt (40) verbunden ist.

## Claims

1. Side wall (1) of a commercial vehicle, in particular a vehicle trailer, with a bottom leg (10) and a side wall leg (20), wherein the side wall leg (20) has an inner side (21) on which at least one recess (23) is provided, wherein at least one channel (30) is arranged in the recess (23) for fastening and guiding a lashing element (2), wherein the channel (30) has an opening (31) which opens into the recess (23) in the direction of the bottom leg (10),
**characterized in that**
inner surfaces (32, 33) of the channel (30) adjacent to the opening (31) are inclined towards the opening (31).

2. Side wall (1) according to Claim 1,
**characterized in that**
the channel (30) has a cam-shaped cross-sectional contour.

3. Side wall (1) according to any one of the preceding claims,
**characterized in that**
the channel (30) comprises a lug (34) which protrudes into the opening (31) and forms a support for an anchoring section (40) of the lashing element (2).

4. Side wall (1) according to any one of the preceding claims,
**characterized in that**
the side wall leg (20) is designed as a hollow chamber profile.

5. Side wall (1) according to any one of the preceding claims,
**characterized in that**
the side wall leg (20) is formed in a single part with the bottom leg (10) as an aluminium continuous casting profile.

6. Side wall (1) according to any one of the preceding claims,
**characterized in that**
a welt profile (36) is formed in the channel (30).

7. Side wall (1) according to any one of the preceding claims,
**characterized in that**
the recess (23) and the channel (30) extend in the longitudinal direction over the entire length of the side wall leg (20).

8. Lashing arrangement with a lashing element (2) and a side wall (1) according to any one of the preceding claims, wherein the lashing element (2) has an anchoring section (40) which can be introduced into the channel (30) and can be anchored in the channel (30) so that when in a rest position the lashing element (2) can be displaced along channel (30), and when in a position of use can be fixed in the channel (30) by friction and/or positive locking means,
**characterized in that**
the anchoring section (40) is designed in a single piece with a lashing eye section (50) and has an outer contour which is adapted such that the anchoring section (40) cooperates with an inner contour of the channel (30) of the side wall leg (20) to hold the lashing element (2) in the channel (30).

9. Lashing arrangement according to Claim 8, **characterized in that**
a recess (45) for supporting the lashing element (2) in a position of use is formed between the anchoring section (40) and a/the lashing eye section (50).

10. Lashing arrangement according to Claim 8 or 9
**characterized in that**
the recess (23) is designed such that when in a rest position the lashing element (2) is completely accommodated therein, in particular so that the lashing element (2) does not protrude beyond the inner side (21) of the side wall leg (20).

11. Lashing arrangement according to any one of Claim 8 to 10,
**characterized in that**
the lashing element (2) has a recess (45) between the anchoring section (40) and the lashing eye section (50), which recess, when the lashing element (2) is in a use position, cooperates with a protruding lug (34) of the channel (30) to transfer lashing forces to the side wall (1).

12. Lashing arrangement according to any one of Claim 8 to 11,
**characterized in that**
spacers (10) are also provided between two lashing elements (2) anchored in the channel (30) and can be snap-connected to the channel (30).

13. Lashing element (2) for a side wall (1) according to any one of Claims 1 to 7, having an anchoring section (40) which can be introduced into the channel (30) and can be anchored in the channel (30) so that when in a rest position the lashing element (2) can be displaced along the channel (30), and when in a position of use can be fixed in the channel (30) by friction and/or positive locking means, wherein the anchoring section (40) is designed in a single piece with a lashing eye section (50) and has an outer contour which is adapted such that the anchoring section (40) cooperates with an inner contour of the channel (30) of the side wall leg (20) to hold the lashing element (2) in the channel (30),
**characterized in that**
a snap-in element (41) is provided that is spring-biased and connected in articulated manner to the anchoring section (40).

## Revendications

1. Paroi latérale (1) d'un véhicule utilitaire, en particulier d'une remorque de véhicule, avec une branche de fond (10) et une branche de paroi latérale (20), sachant que la branche de paroi latérale (20) comporte un côté intérieur (21) sur lequel au moins une cavité (23) est prévue, sachant que dans la cavité (23) est disposé au moins un conduit (30) pour la fixation et le guidage d'un élément d'arrimage (2), sachant que le conduit (30) comporte une ouverture (31), qui débouche dans la cavité (23) en direction de la branche de fond (10),
**caractérisée en ce que**
des surfaces intérieures (32, 33) du conduit (30) limitrophes de l'ouverture (31) sont inclinées vers l'ouverture (31).

2. Paroi latérale (1) selon la revendication 1,
**caractérisée en ce que**
le conduit (30) comporte un profil de section en forme de came.

3. Paroi latérale (1) selon l'une quelconque des revendications précédentes,
**caractérisée en ce que**
le conduit (30) comprend un mentonnet (34) dépassant dans l'ouverture (31), qui forme un support pour une section d'ancrage (40) de l'élément d'arrimage (2).

4. Paroi latérale (1) selon l'une quelconque des revendications précédentes,
**caractérisée en ce que**
la branche de paroi latérale (20) est constituée en forme de profilé à chambre creuse.

5. Paroi latérale (1) selon l'une quelconque des revendications précédentes,
**caractérisée en ce que**
la branche de paroi latérale (20) est constituée en une pièce avec la branche de fond (10) sous la forme d'un profilé en aluminium élaboré par coulée continue.

6. Paroi latérale (1) selon l'une quelconque des revendications précédentes,
**caractérisée en ce qu'**
un profil en bourrelet (36) est constitué dans le conduit (30).

7. Paroi latérale (1) selon l'une quelconque des revendications précédentes,
**caractérisée en ce que**
la cavité (23) et le conduit (30) s'étendent en direction longitudinale sur toute la longueur de la branche de paroi latérale (20).

8. Dispositif d'arrimage avec un élément d'arrimage (2) et une paroi latérale (1) selon l'une quelconque des revendications précédentes, sachant que l'élément d'arrimage (2) comporte une section d'ancrage (40), qui peut être introduite dans le conduit (30) et peut être ancrée dans le conduit (30) de telle manière que l'élément d'arrimage (2) peut être déplacé dans une position de repos le long du conduit (30) et être fixé par conformité de friction et/ou conformité de forme dans le conduit (30) dans une position d'utilisation
**caractérisé en ce que**
la section d'ancrage (40) est constituée en une seule pièce avec une section d'anneau d'arrimage (50) et comporte un profil extérieur qui est adapté de telle manière que la section d'ancrage (40) maintient l'élément d'arrimage (2) dans le conduit (30) en coopération avec un profil intérieur du conduit (30) de la branche de paroi latérale (20).

9. Dispositif d'arrimage selon la revendication 8,
**caractérisé en ce qu'**
un évidement (45) pour le support de l'élément d'arrimage (2) est constitué dans une position d'utilisation entre la section d'ancrage (40) et une/la section d'anneau d'ancrage (50).

10. Dispositif d'arrimage selon la revendication 8 ou 9,
**caractérisé en ce que**
la cavité (23) est constituée de telle manière que l'élément d'arrimage (2) est complètement reçu dedans dans une position de repos, en particulier de telle manière que l'élément d'arrimage (2) ne fait pas saillie sur le côté intérieur (21) de la branche de paroi latérale (20).

11. Dispositif d'arrimage selon l'une quelconque des revendications 8 à 10,
**caractérisé en ce que**
l'élément d'arrimage (2) comporte un évidement (45) entre la section d'ancrage (40) et la section d'anneau d'arrimage (50), qui coopère dans une position d'utilisation de l'élément d'arrimage (2) avec un mentonnet faisant saillie (34) du conduit (30) pour transmettre les forces d'arrimage à la paroi latérale (1) .

12. Dispositif d'arrimage selon l'une quelconque des revendications 8 à 11,
**caractérisé en ce que**
des écarteurs (10) sont prévus en plus entre deux éléments d'arrimage (2) ancrés dans le conduit (30), qui peuvent être reliés par encliquetage au conduit (30) .

13. Elément d'arrimage (2) pour une paroi latérale (1) selon l'une quelconque des revendications 1 à 7, comportant une section d'ancrage (40), qui peut être introduite dans le conduit (30) et peut être ancrée dans le conduit (30) de telle manière que l'élément d'arrimage (2) peut être déplacé dans une position de repos le long du conduit (30) et être fixé par conformité de friction et/ou conformité de forme dans une position d'utilisation dans le conduit (30), sachant que la section d'ancrage (40) est constituée en une seule pièce avec une section d'anneau d'arrimage (50) et comporte un profil extérieur qui est adapté de telle manière que la section d'ancrage (40) maintient l'élément d'arrimage (2) dans le conduit (30) en coopération avec un profil intérieur du conduit (30) de la branche de paroi latérale (20),
**caractérisé en ce qu'**
un élément d'encliquetage (41) est prévu, qui est relié à la section d'ancrage (40) de façon articulée et par précontrainte élastique.
